# EUROPEAN PATENT SPECIFICATION

(11) **EP 3 012 917 B1**
(45) Date of publication and mention of the grant of the patent: **22.07.2020**
(21) Application number: 14190145.4
(22) Date of filing: 23.10.2014
(51) Int. Cl.: H01R 4/30

(54) **Improved method and device for connecting an electrical conductor to a metal bar**
Verfahren und Vorrichtung zum Verbinden eines elektrischen Leiters mit einer Metallschiene
Procédé et dispositif améliorés permettant de connecter un conducteur électrique à une barre métallique

(43) Date of publication of application: 27.04.2016
(73) Proprietor: Safetrack Infrasystems Sisab Ab, 245 93 Staffanstorp (SE)
(72) Inventor: Svensson, Bo, 24796 VEBERÖD (SE)
(74) Representative: Hansson Thyresson AB

(56) References cited:
- WO-A1-2006/057592
- DE-U1- 20 102 063
- DE-U1- 29 815 396
- US-A- 2 006 525
- US-A1- 2013 093 236

## Description

### TECHNICAL FIELD

A method and a device for connecting an electrical conductor to a metal bar, e.g. railway track rail.

### PRIOR ART

A method and a device for connecting an electrical conductor to a metal bar, e.g. railway track rail, is known from WO 2006/057592 which document discloses a bushing provided with a flange which is inserted into, and is by radial expansion fastened in, a hole in the metal bar, a cable lug connected to the electrical conductor is caused to abut against the bushing, and the cable lug is connected to the bushing by means of a bolt disposed in the bushing and forming part of a bolted connection.

### SUMMARY OF THE INVENTION

One object of the present invention is to provide an improved connection where one or more cable lugs can be dismountably mounted on each side of a metal bar. This object is achieved by a set of parts according to claim 1 used according to the method of claim 5.

### BRIEF DESCRIPTION OF THE DRAWINGS

In order that the manner in which the above recited and other advantages and objects of the invention are obtained will be readily understood, a more particular description of the invention briefly described above will be rendered by reference to specific embodiments thereof which are illustrated in the appended drawings.

Understanding that these drawings depict only typical embodiments of the invention and are not therefore to be considered to be limiting of its scope, the invention will be described and explained with additional specificity and detail through the use of the accompanying drawings in which:
- Figure 1: is a schematic exploded view of a set of parts according to the invention for achieving a connection between a metal bar and one or more cable lugs.
- Figure 2: is a schematic exploded view in perspective showing a connection having a cable lug fitted on one side of the metal bar.
- Figure 3: is a schematic exploded view in perspective showing a connection having a cable lug fitted on each side of the metal bar.
- Figure 4: is a schematic cross sectional view in perspective of a first bushing.
- Figure 5a: is a schematic view in perspective of a tapered bushing.
- Figure 5b: is a schematic view in perspective of an alternate tapered bushing.

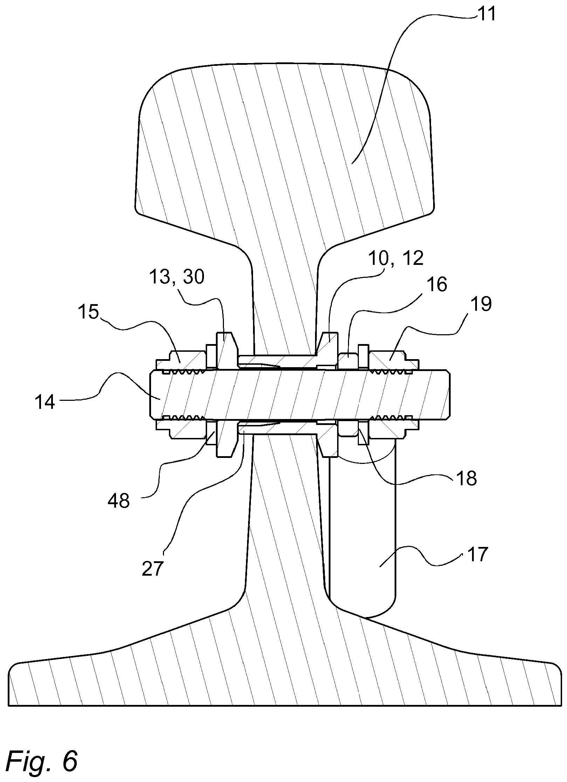

- Figure 6: is a cross sectional view of an assembled and tightened connection corresponding to figure 2.

### DETAILED DESCRIPTION

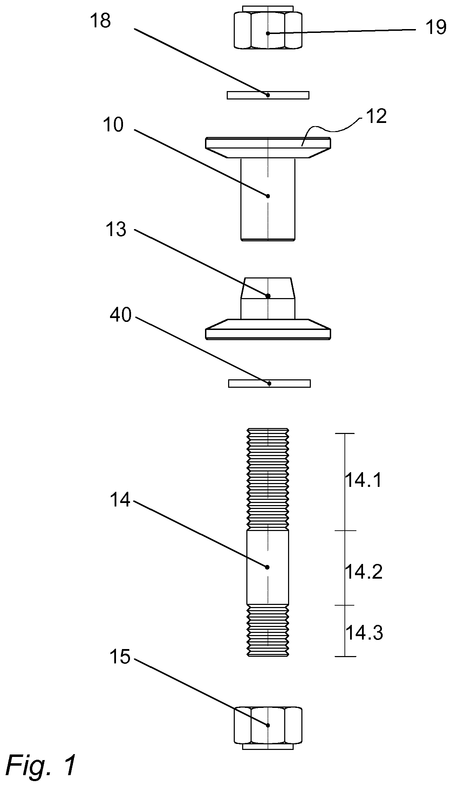

Figure 1 is a schematic exploded view of a set of parts for achieving a connection between a metal bar and one or more cable lugs.

The embodiment of the invention depicted in Fig. 1 is intended for the following cases:
- where one cable lug should be fitted on one side of the metal bar only;
- where one cable lug should be fitted on each side of the metal bar;
- where one cable lug should be fitted on one side, but where a second cable lug is to be fitted later at the other side;
- any of the above cases where one or more cable lugs is to be dismounted or easily replaced.

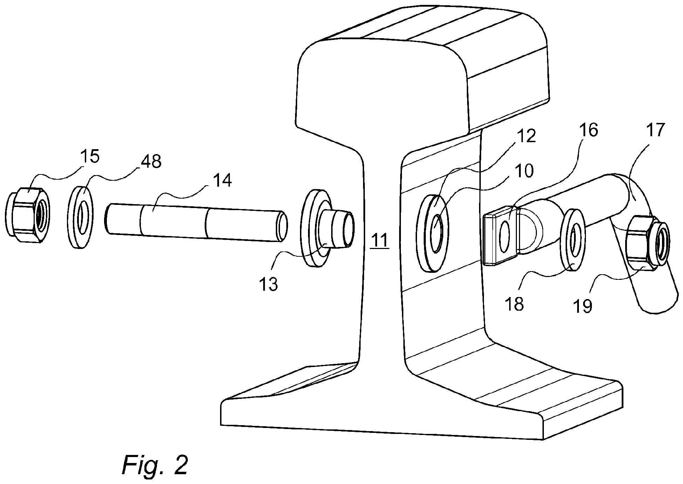

The usage of the set of parts of figure 1 would be explained with the aid of further figures showing also a metal bar in the form of a railway track rail and one or more cables terminated with a cable lug respectively. Turning now also to figure 2, a first bushing 10 is fitted in a hole in a metal bar 11 in a manner described below. With advantage, the edges of the hole are somewhat chamfered. The metal bar may take the form of a rail, in which case the hole is formed in the web of the rail. The first bushing 10 takes the form of a cylindrical hollow body with a collar or flange 12 at a first end and a straight termination at a second end. In this situation, the first bushing 10 already abuts tightly against the wall of the hole or the shell surface of the metal bar and has good electrical connection with the latter.

A tapered bushing 13 has a first end provided with an outside diameter substantially corresponding to the inside diameter of the first bushing 10 at the end with the straight termination when the bushing is fitted in position. The opposite second end portion of the tapered bushing 13 adjacent to the terminating flange has a larger outside diameter and cannot be pressed into the first bushing 10 without considerable force. The length of the tapered bushing 13 is less than the length of the first bushing 10. Preferably, the length of the tapered bushing 13 is less than half or approximately one-third of the length of the first bushing 10.

A stud bolt 14 with a first end threaded portion 14.1, a middle, non-threaded portion 14.2, and a second end threaded portion 14.3 has its second end threaded portion inserted through the tapered bushing 13 and the first bushing 10.

A first cable lug 16 which has running through it an aperture whose diameter allows the stud bolt to pass through abuts against the flange 12 of the first bushing 10. The first cable lug 16 may take a variety of forms but will have a first flat surface for abutment against the flange 12. The first cable lug 16 has running from it an electrical conductor or cable 17 which is intended to form part of an electric circuit in a manner not depicted in more detail.

The first cable lug 16 is also provided with a second flat surface on the opposite side from the first flat surface. The second flat surface is arranged to abut against a washer 18 which accommodates, in a hole running through it, the stud bolt 14. Finally, a nut 19 is screwed in a conventional manner on the first threaded end 14.1 of the stud bolt 14. Tightening the nut 19 causes the opposite nut 15 screwed on the second end threaded portion 14.3 of the stud bolt 14 in advance to press the tapered bushing 13 into the first bushing 10. The tapered bushing 13 will then partly fill the space between the first bushing 10 and the stud bolt 14 and will also exert a permanently high outward pressure between the bushing and the shell surface of the hole, and between the stud bolt 14 and the tapered bushing 13. The tapered bushing 13 will be deformed both against the stud bolt 14 and against the first bushing 10, thereby creating good electrical connection between them.

Those sections of the first bushing 10 and the tapered bushing 13 which are situated outside the hole may constitute a bulge 27 which further secures the first bushing in the axial direction. Tightening the first nut 19 causes the washer 18 to make good contact to cable lug 16. The washer 18 may also be firmly connected to, or form an integral part of, the first nut 19.

Similar to the first bushing 10, the tapered bushing 13 is preferably made of copper or other material with similar strength and good electrical conductivity.

The first bushing 10 is provided with an outside diameter corresponding to the inside diameter of the hole in the metal bar and can be pressed through the hole without any special tool. The means used for pressing and expanding the bushing 10 outwards radially and ensuring good electrical and mechanical contact with the metal bar 11 is preferably an assembly tool as disclosed in prior art patent document WO 2006/057592. The appearance and function of the assembly tool will only be briefly discussed here.

The result of the process described in WO 2006/057592 using an assembly tool is radial widening and plastic deformation of the first bushing 10 and very good abutment against the shell surface of the hole. The assembly tool (not shown in drawings) comprises an elongated expansion device provided with an expansion collar. The elongated expansion device is forced slowly through the first bushing 10. When the expansion collar of the device has passed through, the portion of the first bushing 10 which protrude outside the metal bar 11 will have been widened radially so as to form a bulge, bead or small flange 27 which further prevents the bushing from sliding out of the hole. The first bushing 10 may be configured with a length such that it covers the major part of the inside of the through hole of the metal bar but does not protrude outside the through hole of the metal bar. Such embodiments have the advantage that the flange of the tapered bushing 13 can be arranged closer to the metal bar, not being prevented in its motion during tightening of the stud bolt tightening nuts 15, 19.

### Application of tapered bushing

Thereafter the tapered bushing 13 and a second nut 15 is fitted to the stud bolt 14 so that the flanged end portion of the tapered bushing 13 abuts the second nut 15 or a washer there between, and the stud bolt 14 including the above parts is inserted through the bushing 10. The tapered bushing 13 preferably has three portions; a narrower portion extending from a first end, a thicker portion extending from the narrower portion towards a flange end portion 50. The narrower portion of the tapered bushing 13 is configured with an outside diameter which corresponds to, or is slightly smaller than, the inside diameter of the bushing after the expansion device has passed through. The thicker portion of the tapered bushing 13 has an outside diameter which is larger than the inside diameter of the first bushing after the expansion device has passed through. This means that a certain force has to be exerted in order to press the tapered bushing 13 into the first bushing 10. This certain force is suitably exerted by tightening the tightening nuts 15, 19 of the stud bolt.

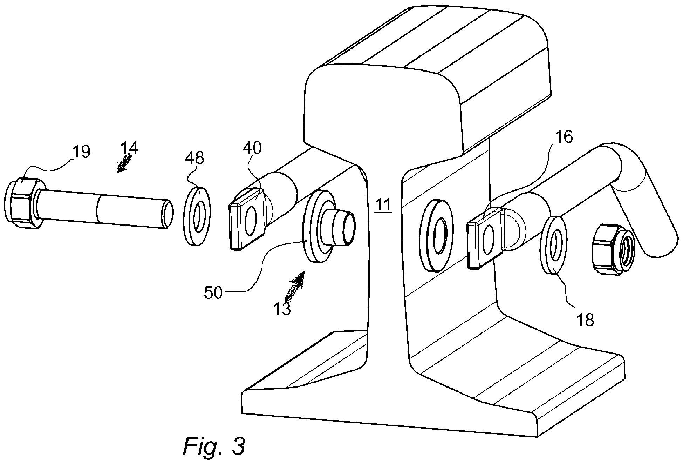

The length of the stud bolt 14 is configured such that it protrudes at both sides of the intended metal bar sufficiently to enable a cable lug 16, 40, a washer 18, 48 and a nut 19, 15 to be fitted to it at each side of the metal bar, as depicted in Fig. 3. In the embodiment depicted in figure 3, the cable lug 16 is provided in a conventional manner with two mutually opposite flat sides. A first flat side abuts against the flange 12 of the bushing 10, and a second flat side abuts a washer 18 placed against it in a conventional manner. Thereafter a nut 19 is screwed on the stud bolt 14 in a conventional manner.

When nut 15 and nut 19 on the stud bolt 14 are tightened, the nut 15 will be drawn towards washer 48 and second cable lug 40 which in turn will abut flange 30 of tapered bushing 13. The stud bolt may be made of high-strength material, thereby making it possible for very great pre-stress force to be applied and ensuring very good electrical and mechanical connection.

The shapes of, and the collaboration between, the washer 48 and the tapered bushing 13 increase considerably the total transition surface of the connection which is available for electric current as compared to previously known bolted connections. The first bushing 10 and the tapered bushing 13 also ensure that no narrow gaps occur between the connection and the metal bar. The risk of capillary moisture and other remaining moisture which might cause problems is thus also prevented.

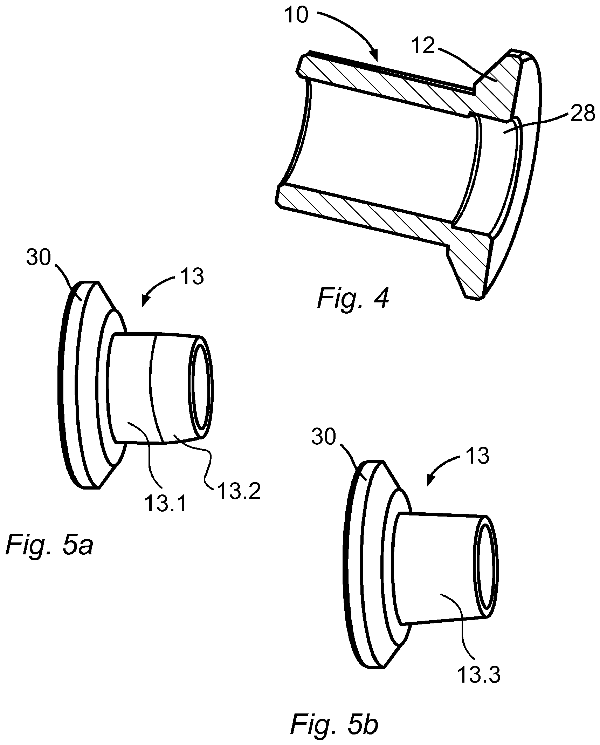

Fig. 5a and 5b depict suitable embodiments of the tapered bushing 13. The tapered bushing 13 is conical in the longitudinal direction and circular in cross-section. It is preferably made of copper or similar material with good electrical conductivity and softness enabling it to flow out in the manner described above. Figure 5a shows a tapered bushing with a cylindrical portion 13.1 and a conical portion 13.2, while figure 5b shows an alternate tapered bushing without cylindrical portion and with a consequently longer conical portion. Under most conditions both types of tapered bushings may perform equally well.

An example of an embodiment of the first bushing 10 is depicted in Fig. 4. The first bushing 10 is cylindrical and is provided at one end with a flange 12. The first bushing has running through it a hole which at the flanged end is provided with a recess 28 with a larger diameter. The portion 28 with larger diameter corresponds in length to the length of the flange, with the re-suit that the mentioned expansion collar of the expansion device does not cause any radial expansion of the bushing outside the region which is enclosed by the metal bar. The shape of the portion 28 also ensures a completely flat outer flange surface even after the expansion device has passed through. Any outflow of material caused by the expansion device can be accommodated in that portion. Another advantage achieved is that the work involved in using the expansion device is not increased unnecessarily, since only the section of the first bushing which is within the metal bar is subjected to the radial widening. The first bushing 10 is also made of copper or similar material with good electrical conductivity and softness enabling it to flow out in the manner described above.

A particular advantage of the present invention is the suitability of fitting cable lugs on both sides of the metal bar as depicted in fig. 3. This is facilitated by the properties of the stud bolt 14 and by the properties of the conical bushing 13. The conical bushing 13 has a conical portion, and the conical portion leads to a straight cylindrical portion terminated by a flange 30.

The stud bolt 14 plays an active part in the electrical contact between the cable lug(s) 16, and the metal bar, since it has good electrical connection not only with the upper side of the cable lug via the nut and the washer but also with the metal bar via the conical bushing 13 and the first bushing 10. As the stud bolt 14 plays an active part in the electrical contact, both sides of the cable lug(s) can be used for electrical conduction, thereby reducing the total transition resistance. The two sides of the cable lug are mutually opposite, which means that, with the same pre-stress force, a larger surface can be used as transition surface for electric current without the outward pressure decreasing. This effect may be further enhanced by using a bolt made of high-strength material. It is also an advantage that the two nuts of the stud bolt can be tightened independently creating high pre-stress forces, compared e.g. to a standard bolt with a bolt head. Further, solution with stud bolt and flanged first and conical bushings, facilitate independent dismount of each side connection, and independent replacement of cable lugs.

### Set of parts

The invention would be particularly useful as a set of parts to bring by electricians or railway workers to a railway track rail in need of electrical connection. Such a set would consist of the parts described above, an in particular the vital first bushing and tapered bushing. The set of parts advantageously also contain the stud bolt including nuts, and may also contain a drill bit of a suitable diameter to give rise to a through hole in the metal bar of a diameter suitable for the outer diameter of the first bushing as elaborated above. The set of parts may advantageously contain further accessories such as an expansion tool for the first bushing.

### Legend

- 10: First bushing
- 11: Metal bar
- 12: Flange of first bushing
- 13: Tapered bushing
- 13.1: Cylindrical portion of tapered bushing
- 13.2: Tapered portion of tapered bushing
- 13.3: Tapered portion of tapered bushing without cylindrical portion
- 14: Stud bolt
- 15, 19: Tightening nut(s)
- 16: First cable lug
- 17: First electrical conductor
- 18, 48: Washer(s)
- 27: Bulge
- 30: Flange of tapered bushing
- 40: Second cable lug
- 42: Second electrical conductor

## Claims

1. A set of parts for connecting an electrical conductor (17, 42) having a cable lug(16) to a metal bar (11) having a through hole, the set of parts comprises
- a first bushing (10) provided with a flange (12);
- a tapered bushing (13), having a flange (30);
the set of parts **characterized in that** it further comprises
- a stud bolt (14) having a first end threaded portion (14.1), a middle, non-threaded portion (14.2), and a second end threaded portion (14.3) inserted through the tapered bushing (13) and the first bushing (10);
- a first and a second tightening nut (15, 19);
wherein the first bushing (10) with a flange (12) is configured to have a cylindrical first portion with an outer diameter to fit in an inner diameter of the through hole of the metal bar (11), and wherein the tapered bushing (13) is configured to have a narrower portion and a thicker portion, and wherein the narrower portion is configured with a first diameter, and where the thicker portion is configured with a second diameter, and wherein the second diameter is larger than the first diameter, and wherein the second diameter of the tapered bushing is configured to be slightly bigger than a mounted inner diameter of the first bushing, said mounted inner diameter being the result of mounting the first bushing in the through hole by expansion, and wherein
- the inner diameter of the tapered bushing (13) at the thicker portion is slightly bigger than a diameter of the stud bolt (14) such that when pressing the tapered bushing (13) surrounding the stud bolt (14) and abutting against the second tightening nut (15) of the stud bolt (14) into the first bushing, radial constriction of the tapered bushing (13) round the stud bolt occurs as a result of the pressing.

2. The set of parts according to claim 1, wherein the stud bolt is made of a high strength material.

3. The set of parts of claim 1 or 2 wherein the narrower portion of the tapered bushing (13) is tapered towards a first end of the tapered bushing.

4. The set of parts of claim 1 or 2 or 3, further comprising
- a first and a second washer (18, 48).

5. A method of using the set of parts according to claim 1 for connecting an electrical conductor (17) to a metal bar (11) by bolted connection, whereby a first bushing (10) provided with a flange (12) is inserted into, and is by radial expansion fastened in, a through hole in the metal bar (11),
a cable lug (16) connected to the electrical conductor (17) is caused to abut against the first bushing (10), and the cable lug (16) is connected to the first bushing (10) by means of a stud bolt (14) disposed in the first bushing (10) and forming part of the bolted connection, **characterised by** the following steps
- placing the first bushing in the through hole of the metal bar;
- drawing an expansion device through the first bushing (10) in order to expand said first bushing (10);
- inserting a stud bolt (14) having a first end threaded portion (14.1), a middle, non-threaded portion (14.2), and a second end threaded portion (14.3) through the tapered bushing (13) and the first bushing (10);
- screwing a second tightening nut (15) to the second end threaded portion (14.3) of the stud bolt (14);
- pressing a tapered bushing (13) with a flange (30) surrounding the stud bolt (14) and abutting against the second tightening nut (15) of the stud bolt (14) into the first bushing (10) during radial widening of the first bushing (10) and radial narrowing of the tapered bushing (13) round the stud bolt (14) as a result of tightening the bolted connection aided by screwing the first tightening nut (19) to the first threaded end (14.1) of the stud bolt (14) on one side of the metal bar and the second tightening nut (15) on the opposite side of the metal bar (11) respectively, wherein
the first bushing (10) is configured to have a cylindrical first portion with an outer diameter to fit in an inner diameter of the through hole of the metal bar (11), and wherein the tapered bushing (13) is configured to have a narrower portion and a thicker portion, and wherein the narrower portion is configured with a first diameter, and where the thicker portion is configured with a second diameter, and wherein the second diameter is larger than the first diameter, and wherein the second diameter of the tapered bushing is configured to be slightly bigger than a mounted inner diameter of the first bushing, said mounted inner diameter being the result of mounting the first bushing in the through hole by expansion, and wherein
- the inner diameter of the tapered bushing (13) is slightly bigger than a diameter of the stud bolt such that when pressing the tapered bushing (13) surrounding the stud bolt (14) and abutting against the second tightening nut (15) of the stud bolt (14) into the first bushing, radial constriction of the tapered bushing (13) round the stud bolt occurs as a result of the pressing.

## Patentansprüche

1. Teilesatz zum Verbinden eines elektrischen Leiters (17, 42), der einen Kabelschuh (16) aufweist, mit einer Metallstange (11), die ein Durchgangsloch aufweist, wobei der Teilesatz Folgendes umfasst:
- eine erste Buchse (10), die mit einem Flansch (12) versehen ist;
- eine konische Buchse (13), die eine Flansch (30) aufweist;
wobei der Teilesatz **dadurch gekennzeichnet ist, dass** er ferner Folgendes umfasst:
- eine Stiftschraube (14), die einen Gewindeabschnitt an dem ersten Ende (14.1), einen mittleren, gewindelosen Abschnitt (14.2) und einen Gewindeabschnitt an dem zweiten Ende (14.3) aufweist, der durch die konische Buchse (13) und die erste Buchse (10) eingeführt wird;
- eine erste und eine zweite Spannmutter (15, 19); wobei die erste Buchse (10) mit einem Flansch (12) konfiguriert ist, um einen zylindrischen ersten Abschnitt mit einem Außendurchmesser aufzuweisen, der in einen Innendurchmesser des Durchgangslochs der Metallstange (11) passt, und wobei die konische Buchse (13) konfiguriert ist, um einen schmaleren Abschnitt und einen dickeren Abschnitt aufzuweisen, und wobei der schmalere Abschnitt mit einem ersten Durchmesser konfiguriert ist, und wobei der dickere Abschnitt mit einem zweiten Durchmesser konfiguriert ist, und wobei der zweite Durchmesser größer als der erste Durchmesser ist, und wobei der zweite Durchmesser der konischen Buchse konfiguriert ist, um geringfügig größer als ein gelagerter Innendurchmesser der ersten Buchse zu sein, wobei der gelagerte Innendurchmesser das Ergebnis der Lagerung der ersten Buchse in dem Durchgangsloch durch Expansion ist, und wobei
- der Innendurchmesser der konischen Buchse (13) an dem dickeren Abschnitt geringfügig größer als ein Durchmesser der Stiftschraube (14) derart ist, dass, wenn die konische Buchse (13), die die Stiftschraube (14) umgibt und gegen die zweite Spannmutter (15) der Stiftschraube (14) anstößt, in die erste Buchse gepresst wird, eine radiale Einschnürung der konischen Buchse (13) um die Stiftschraube herum als Folge des Pressens erfolgt.

2. Teilesatz nach Anspruch 1, wobei die Stiftschraube aus einem hochfesten Material besteht.

3. Teilesatz nach Anspruch 1 oder 2, wobei der schmalere Abschnitt der konischen Buchse (13) zu einem ersten Ende der konischen Buchse hin konisch ist.

4. Teilesatz nach Anspruch 1 oder 2 oder 3, ferner umfassend:
- eine erste und eine zweite Scheibe (18, 48).

5. Verfahren zur Verwendung des Teilesatzes nach Anspruch 1 zum Verbinden eines elektrischen Leiters (17) mit einer Metallstange (11) durch Schraubverbindung, wodurch eine erste Buchse (10), die mit einem Flansch (12) versehen ist, in ein Durchgangsloch in der Metallstange (11) eingeführt und durch radiale Ausdehnung darin befestigt wird, ein Kabelschuh (16), der mit dem elektrischen Leiter (17) verbunden ist, veranlasst wird, gegen die erste Buchse (10) anzuliegen und der Kabelschuh (16) mittels einer Stiftschraube (14) mit der ersten Buchse (10) verbunden wird, die in der ersten Buchse (10) angeordnet ist und einen Teil der Schraubverbindung ausbildet, **gekennzeichnet durch** die folgenden Schritte:
- Platzieren der ersten Buchse in dem Durchgangsloch der Metallstange;
- Ziehen einer Expansionsvorrichtung durch die erste Buchse (10), um die erste Buchse (10) zu expandieren;
- Einführen einer Stiftschraube (14), die einen Gewindeabschnitt an dem ersten Ende (14.1), einen mittleren, gewindelosen Abschnitt (14.2) und einen Gewindeabschnitt an dem zweiten Ende (14.3) aufweist, durch die konische Buchse (13) und die erste Buchse (10);
- Verschrauben einer zweiten Spannmutter (15) mit dem Gewindeabschnitt an dem zweiten Ende (14.3) der Stiftschraube (14);
- Drücken einer konischen Buchse (13) mit einem Flansch (30), der die Stiftschraube (14) umgibt und an der zweite Spannmutter (15) der Stiftschraube (14) anliegt, in die erste Buchse (10), während der radialen Verbreiterung der ersten Buchse (10) und der radiale Verengung der konischen Buchse (13) um die Stiftschraube (14) als Folge des Spannens der Schraubverbindung, unterstützt durch Verschrauben der ersten Spannmutter (19) mit dem ersten Gewindeende (14.1) der Stiftschraube (14), auf einer Seite der Metallstange beziehungsweise der zweiten Spannmutter (15) auf der gegenüberliegenden Seite der Metallstange (11), wobei die erste Buchse (10) konfiguriert ist, um einen zylindrischen ersten Abschnitt mit einem Außendurchmesser aufzuweisen, um in einen Innendurchmesser des Durchgangslochs der Metallstange (11) zu passen, und wobei die konische Buchse (13) konfiguriert ist, um einen schmaleren Abschnitt und einen dickeren Abschnitt aufzuweisen, und wobei der schmalere Abschnitt mit einem ersten Durchmesser konfiguriert ist, und wobei der dickere Abschnitt mit einem zweiten Durchmesser konfiguriert ist, und wobei der zweite Durchmesser größer als der erste Durchmesser ist, und wobei der zweite Durchmesser der konischen Buchse konfiguriert ist, um geringfügig größer als ein gelagerter Innendurchmesser der ersten Buchse zu sein, wobei der gelagerte Innendurchmesser das Ergebnis der Lagerung der ersten Buchse in dem Durchgangsloch durch Expansion ist, und wobei
- der Innendurchmesser der konischen Buchse (13) an dem dickeren Abschnitt geringfügig größer als ein Durchmesser der Stiftschraube derart ist, dass, wenn die konische Buchse (13), die die Stiftschraube (14) umgibt und an die zweite Spannmutter (15) der Stiftschraube (14) in die erste Buchse anstößt, in die erste Buchse gepresst wird, eine radiale Einschnürung der konischen Buchse (13) um die Stiftschraube herum als Folge des Pressens erfolgt.

## Revendications

1. Ensemble de pièces destiné à relier un conducteur électrique (17, 42) ayant un serre-câble (16), à une barre métallique (11) ayant un trou traversant, l'ensemble de pièces comprenant
- une première douille (10) munie d'une bride (12) ;
- une douille effilée (13), ayant une bride (30) ; l'ensemble de pièces **caractérisé en ce qu'**il comprend en outre
- un goujon (14) ayant une première partie filetée d'extrémité (14.1), une partie médiane non filetée (14.2) et une seconde partie filetée d'extrémité (14.3) insérée à travers la douille effilée (13) et la première douille (10) ;
- un premier et un second écrou de serrage (15, 19) ;
dans lequel la première douille (10) munie d'une bride (12) est conçue pour avoir une première partie cylindrique avec un diamètre extérieur pouvant s'adapter dans un diamètre intérieur du trou traversant de la barre métallique (11), et dans lequel la douille effilée (13) est conçue pour avoir une partie plus étroite et une partie plus épaisse, et dans lequel la partie plus étroite est conçue avec un premier diamètre, et dans lequel la partie plus épaisse est conçue avec un second diamètre, et dans lequel le second diamètre est supérieur au premier diamètre, et dans lequel le second diamètre de la douille effilée est conçu pour être légèrement supérieur à un diamètre intérieur monté de la première douille, ledit diamètre intérieur monté étant le résultat du montage de la première douille dans le trou traversant par expansion, et dans lequel
- le diamètre intérieur de la douille effilée (13) au niveau de la partie la plus épaisse est légèrement supérieur à un diamètre du goujon (14) de telle sorte que lors d'une pression sur la douille effilée (13) entourant le goujon (14) et venant en butée contre le second écrou de serrage (15) du goujon (14) dans la première douille, une constriction radiale de la douille effilée (13) autour du goujon se produit à la suite de la pression.

2. Ensemble de pièces selon la revendication 1, dans lequel le goujon est constitué de matériau à haute résistance.

3. Ensemble de pièces selon la revendication 1 ou 2, dans lequel la partie plus étroite de la douille effilée (13) est effilée vers une première extrémité de la douille effilée.

4. Ensemble de pièces selon la revendication 1 ou 2 ou 3, comprenant en outre
- une première et une seconde rondelles (18, 48).

5. Procédé d'utilisation de l'ensemble de pièces selon la revendication 1 pour relier un conducteur électrique (17) à une barre métallique (11) par raccordement boulonné, moyennant quoi une première douille (10) munie d'une bride (12) est insérée, et fixée par expansion radiale, dans un trou traversant de la barre métallique (11), un serre-câble (16) relié au conducteur électrique (17) vient en butée contre la première traversée (10) et le serre-câble (16) est relié à la première douille (10) au moyen d'un goujon (14) disposé dans la première douille (10) et faisant partie du raccordement boulonné, **caractérisé par** les étapes suivantes
- le placement la première douille dans le trou traversant de la barre métallique ;
- le fait de tirer un dispositif d'expansion à travers la première douille (10) afin de mettre en expansion ladite première douille (10) ;
- l'insertion d'un goujon (14) ayant une première partie filetée d'extrémité (14.1), une partie médiane non filetée (14.2) et une seconde partie filetée d'extrémité (14.3) à travers la douille effilée (13) et la première douille (10) ;
- le vissage d'un second écrou de serrage (15) à la seconde partie filetée d'extrémité (14.3) du goujon (14) ;
- l'application d'une pression à une douille effilée (13) munie d'une bride (30) entourant le goujon (14) et venant en butée contre le second écrou de serrage (15) du goujon (14) dans la première douille (10) lors de l'élargissement radial de la première douille (10) et le rétrécissement radial de la douille effilée (13) autour du goujon (14) à la suite du serrage du raccordement boulonné aidé par le vissage du premier écrou de serrage (19) à la première extrémité filetée (14.1) du goujon (14) sur un côté de la barre métallique et du second écrou de serrage (15) sur le côté opposé de la barre métallique (11) respectivement, dans lequel la première douille (10) est conçue pour avoir une première partie cylindrique avec un diamètre extérieur pouvant s'adapter dans un diamètre intérieur du trou traversant de la barre métallique (11), et dans lequel la douille effilée (13) est conçue pour avoir une partie plus étroite et une partie plus épaisse, et dans lequel la partie plus étroite est conçue avec un premier diamètre, et dans lequel la partie la plus épaisse est conçue avec un second diamètre, et dans lequel le second diamètre est supérieur au premier diamètre, et dans lequel le second diamètre de la douille effilée est conçu pour être légèrement supérieur à un diamètre intérieur monté de la première douille, ledit diamètre intérieur monté étant le résultat du montage de la première douille dans le trou traversant par expansion, et dans lequel
- le diamètre intérieur de la douille effilée (13) est légèrement supérieur à un diamètre du goujon de telle sorte qu'en appliquant une pression sur la douille effilée (13) entourant le goujon (14) et venant en butée contre le second écrou de serrage (15) du goujon (14) dans la première douille, une constriction radiale de la douille effilée (13) autour du boulon à goujon se produit à la suite de la pression.
